# FASCICULE DE BREVET EUROPEEN

(11) **EP 3 934 420 B1**
(45) Date de publication et mention de la délivrance du brevet: **05.04.2023**
(21) Numéro de dépôt: 20725884.9
(22) Date de dépôt: 12.03.2020
(51) Int. Cl.: A01M 7/00

(54) **SYSTÈME DE PULVÉRISATION MODULABLE**
MODULARES SPRITZGERÄT
MODULAR SPRAYER SYSTEM

(30) Priorité: 30.04.2019 FR 1904586
(43) Date de publication de la demande: 12.01.2022
(73) Titulaire: Exel Industries, 51200 Epernay (FR)
(72) Inventeur: DARRIEUTORT, Anthony, 75009 PARIS (FR); FERRIERE, Michel, 75009 PARIS (FR)
(74) Mandataire: Argyma
(86) Numéro de dépôt international: PCT/FR2020/050517
(87) Numéro de publication internationale: WO 2020/221972

(56) Documents cités:
- EP-A1- 0 574 740
- EP-A2- 0 327 037
- DE-A1- 19 821 283
- FR-A1- 2 969 902

## Description

### DOMAINE TECHNIQUE

La présente invention se rapporte au domaine de la pulvérisation de liquide de traitement sur de la végétation, de préférence disposée selon des rangs, et en particulier des rangs de vigne.

### ÉTAT DE LA TECHNIQUE ANTÉRIEURE

Le traitement d'une végétation disposée selon des rangs est réalisé avec un pulvérisateur, tracté ou porté par un véhicule tel qu'un tracteur. Un tel pulvérisateur est connu par exemple de DE 198 21 283 A1, FR 2 969 902 A1 ou EP 0 574740 A1.

Le pulvérisateur comporte généralement une cuve contenant le liquide de traitement à pulvériser, une pompe, ainsi qu'un système de pulvérisation comprenant plusieurs dispositifs de pulvérisation alimentés en liquide de traitement par la pompe. Le liquide de traitement peut être un liquide phytosanitaire ou un engrais liquide, ou encore un mélange de plusieurs de ces liquides.

Le choix du liquide de traitement à pulvériser peut dépendre du niveau de croissance de la végétation à traiter. Le niveau de croissance de la végétation entre également en compte pour déterminer la manière de réaliser la pulvérisation. En particulier, lorsque la végétation se trouve en début de croissance ou avant même d'avoir débutée sa croissance, la faible surface de feuilles ou l'absence de feuilles implique la traversée du rang par une partie du liquide de traitement, lorsque celui-ci est pulvérisé depuis l'un des deux côtés de ce rang de végétation. Pour limiter les pertes de liquide, le dispositif de pulvérisation agencé du côté opposé peut être équipé de moyens de récupération d'au moins une partie du liquide ayant traversé le rang. En conséquence, lors de ce premier type de traitement, deux dispositifs de pulvérisation sont agencés de part et d'autre de chaque rang, et délimitent entre eux une zone de pulvérisation dans laquelle se situe ce même rang. Les deux dispositifs de pulvérisation présentent chacun une face fonctionnalisée en regard de l'un des deux côtés du rang, et les deux faces fonctionnalisées se trouvent ainsi en vis-à-vis. Chaque face fonctionnalisée permet d'assurer à la fois la pulvérisation de liquide en direction de l'un des côtés du rang, et la récupération d'une partie du liquide provenant de l'autre dispositif de pulvérisation en vis-à-vis.

En revanche, lorsque la végétation atteint un niveau de croissance tel que la densité de feuilles empêche le liquide de traitement de traverser le rang, la récupération de liquide du côté opposé du rang n'est plus requise. Il s'agit alors d'un second type de traitement de la végétation, toujours opéré depuis les deux côtés des rangs, mais qui est généralement réalisé avec un pulvérisateur différent de celui mis en oeuvre pour la pulvérisation selon le premier type de traitement décrit ci-dessus. En particulier, pour le second type de traitement, les pulvérisateurs employés permettent habituellement de traiter simultanément un plus grand nombre de rangs.

La nécessité de disposer de plusieurs pulvérisateurs de conceptions différentes, pour s'adapter à l'évolution des végétaux au cours de leur croissance, engendre des coûts d'achat, d'entretien et de stockage particulièrement élevés.

### EXPOSÉ DE L'INVENTION

Pour répondre à la problématique identifiée ci-dessus, l'invention a tout d'abord pour objet un système de pulvérisation de liquide de traitement de végétation pour pulvérisateur, le système comprenant une structure de support ainsi qu'un groupe central de dispositifs de pulvérisation principaux suspendus à la structure de support et espacés les uns des autres selon une direction transversale du système, les dispositifs de pulvérisation principaux étant prévus dans un nombre n pair supérieur ou égal à deux et étant associés deux à deux de manière à former un nombre n/2 de paires de dispositifs, chaque paire délimitant transversalement entre ses deux dispositifs de pulvérisation principaux une zone de pulvérisation, et chacun des deux dispositifs de pulvérisation principaux comprenant une première face ainsi qu'une seconde face opposée à la première face selon la direction transversale, la première face délimitant la zone de pulvérisation et étant équipée de moyens de pulvérisation de liquide de traitement ainsi que de moyens de récupération de liquide de traitement, et la seconde face étant dépourvue de moyens de pulvérisation de liquide de traitement.

Selon l'invention, le système comporte en outre, associé à chacun des deux dispositifs de pulvérisation principaux agencés respectivement aux deux extrémités transversales opposées du groupe central, dits dispositifs extrêmes, un dispositif de pulvérisation additionnel de conception différente de celle des dispositifs de pulvérisation principaux, chaque dispositif de pulvérisation additionnel comportant une première face ainsi qu'une seconde face opposée à la première face selon la direction transversale, la première face étant équipée de moyens de pulvérisation de liquide de traitement tandis que la seconde face est dépourvue de moyens de pulvérisation de liquide de traitement, chaque dispositif de pulvérisation additionnel étant agencé mobile par rapport à son dispositif extrême associé, entre :
- une première position inactive de repos ; et
- une seconde position de fonctionnement dans laquelle le dispositif de pulvérisation additionnel se trouve, selon la direction transversale, plus écarté de son dispositif extrême associé que dans la première position inactive de repos, seconde position dans laquelle la première face du dispositif de pulvérisation additionnel se trouve orientée transversalement vers l'extérieur, de manière à former une face extérieure d'extrémité transversale du système de pulvérisation.

Grâce à la conception spécifique à la présente invention, le système de pulvérisation modulable permet avantageusement de réaliser les deux types de traitement décrits ci-dessus. En d'autres termes, le système de pulvérisation peut être amené dans des configurations différentes, chacune adaptée à un niveau de croissance donné de la végétation à traiter. Par conséquent, un même et unique système de pulvérisation convient à tous les niveaux de croissance de la végétation, ce qui réduit avantageusement les coûts d'achat, d'entretien et de stockage associés au pulvérisateur.

L'invention présente par ailleurs au moins l'une des caractéristiques optionnelles suivantes, prises isolément ou en combinaison.

Les dispositifs de pulvérisation principaux et les dispositifs de pulvérisation additionnels sont sensiblement parallèles les uns aux autres, et de préférence agencés verticalement. La structure de support comporte une partie centrale de support, ainsi que deux parties latérales de support montées de part et d'autre de la partie centrale de support. De préférence, chacune des deux parties latérales de support est montée pivotante sur la partie centrale de support, et le système comporte un actionneur permettant de commander la position angulaire de chaque partie latérale de support par rapport à la partie centrale de support. Ce degré de liberté permet notamment de rabattre les parties latérales de support durant le roulage sur route, pour limiter l'encombrement transversal du système de pulvérisation. Il permet également de rabattre momentanément l'une et/ou l'autre des deux parties latérales de support lors du déplacement du système de pulvérisation sur la parcelle à traiter, par exemple en bout de rangs lors d'un virage, afin de limiter l'encombrement du système vers l'extérieur du virage et limiter ainsi les risques de percussion d'autres rangs sur la parcelle. Néanmoins, d'autres cinématiques peuvent être envisagées pour les deux parties latérales de support par rapport à la partie centrale de support, sans sortir du cadre de l'invention.

Le système de pulvérisation comporte une unité de commande permettant d'amener le système de pulvérisation dans deux configurations de fonctionnement distinctes, à savoir
- une première configuration dans laquelle les moyens de récupération de liquide de traitement des dispositifs de pulvérisation principaux sont activés, et dans laquelle les deux dispositifs de pulvérisation additionnels adoptent leur première position inactive de repos ; et
- une seconde configuration dans laquelle les moyens de récupération de liquide de traitement des dispositifs de pulvérisation principaux sont désactivés, et dans laquelle les deux dispositifs de pulvérisation additionnels adoptent leur seconde position de fonctionnement.

La première configuration est alors préférentiellement adoptée lorsque le feuillage de la végétation est inexistant ou de faible densité, pour traiter un nombre n/2 de rangs de végétation, avec le même nombre n/2 de paires de dispositifs de pulvérisation principaux. La seconde configuration est quant à elle préférentiellement adaptée à un feuillage plus dense, pour traiter d'une part un nombre n/2 de rangs de végétation avec le même nombre n/2 de paires de dispositifs de pulvérisation principaux, et pour traiter d'autre part l'un des deux côtés de deux rangs additionnels respectivement agencés de part et d'autre du groupe central de n/2 rangs. Dans cette seconde configuration, le nombre de rangs traités simultanément est donc de n/2 rangs auquel s'ajoutent deux demi-rangs, ce nombre étant également dit « n/2 + 1 » rangs.

Les moyens de récupération de liquide de traitement de chaque dispositif de pulvérisation principal comprennent au moins :
- un panneau de captation de liquide de traitement ;
- un bac de récupération de liquide de traitement, le bac étant agencé sous le panneau de captation ; et
- une pompe d'évacuation du liquide de traitement collecté dans le bac de récupération.

Les moyens de pulvérisation de liquide de traitement des dispositifs de pulvérisation principaux et des dispositifs de pulvérisation additionnels comprennent une pluralité de buses de pulvérisation de liquide de traitement, réparties le long de leur dispositif de pulvérisation associé.

Chaque dispositif de pulvérisation additionnel est agencé mobile en translation par rapport à son dispositif extrême associé, entre la première position inactive de repos et la seconde position de fonctionnement. D'autres types de déplacements sont néanmoins envisageables, comme une rotation, par exemple selon un axe vertical ou horizontal, sans sortir du cadre de l'invention.

De préférence, les moyens de pulvérisation de liquide de traitement sont associés à une assistance d'air, d'une manière connue de l'homme du métier.

L'invention a également pour objet un pulvérisateur de liquide de traitement de végétation destiné à être tracté par un véhicule ou porté par ce dernier, le pulvérisateur comprenant un système de pulvérisation tel que décrit ci-dessus, ainsi qu'au moins une cuve de liquide de traitement et au moins une pompe pour alimenter les dispositifs de pulvérisation principaux et les dispositifs de pulvérisation additionnels.

L'invention a aussi pour objet un procédé de traitement de végétation disposée selon des rangs, à l'aide d'un système de pulvérisation tel que décrit ci-dessus et se trouvant dans la seconde configuration dans laquelle les moyens de récupération de liquide de traitement des dispositifs de pulvérisation principaux sont désactivés, et dans laquelle les deux dispositifs de pulvérisation additionnels adoptent leur seconde position de fonctionnement, le procédé consistant à traiter simultanément :
- un groupe central de rangs comprenant un nombre n/2 de rangs consécutifs, en associant chacune desdites n/2 paires de dispositifs de pulvérisation principaux à l'un des n/2 rangs, de manière à ce que chaque rang soit agencé au moins en partie dans la zone de pulvérisation délimitée par la paire de dispositifs associée, pour être pulvérisé de liquide de traitement sur ses deux côtés opposés ; et
- l'un des deux côtés opposés de deux rangs additionnels respectivement agencés de part et d'autre du groupe central de rangs, à l'aide des deux dispositifs de pulvérisation additionnels adoptant leur seconde position de fonctionnement.

L'invention a enfin pour objet un autre procédé de traitement de végétation disposée selon des rangs, à l'aide du système de pulvérisation se trouvant dans la première configuration dans laquelle les moyens de récupération de liquide de traitement des dispositifs de pulvérisation principaux sont activés, et dans laquelle les deux dispositifs de pulvérisation additionnels adoptent leur première position inactive de repos, le procédé consistant à traiter simultanément :
- un groupe central de rangs comprenant un nombre n/2 de rangs consécutifs, en associant chacune desdites n/2 paires de dispositifs de pulvérisation principaux à l'un des n/2 rangs, de manière à ce que chaque rang soit agencé au moins en partie dans la zone de pulvérisation délimitée par la paire de dispositifs associée, pour être pulvérisé de liquide de traitement sur ses deux côtés opposés.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue en perspective d'un pulvérisateur selon un premier mode de réalisation préféré de l'invention ;
[Fig. 2] représente une vue selon la direction transversale d'un dispositif de pulvérisation principal de liquide de traitement, équipant le pulvérisateur montré sur la figure précédente, le dispositif de pulvérisation étant vu depuis l'intérieur d'une zone de pulvérisation qu'il délimite ;

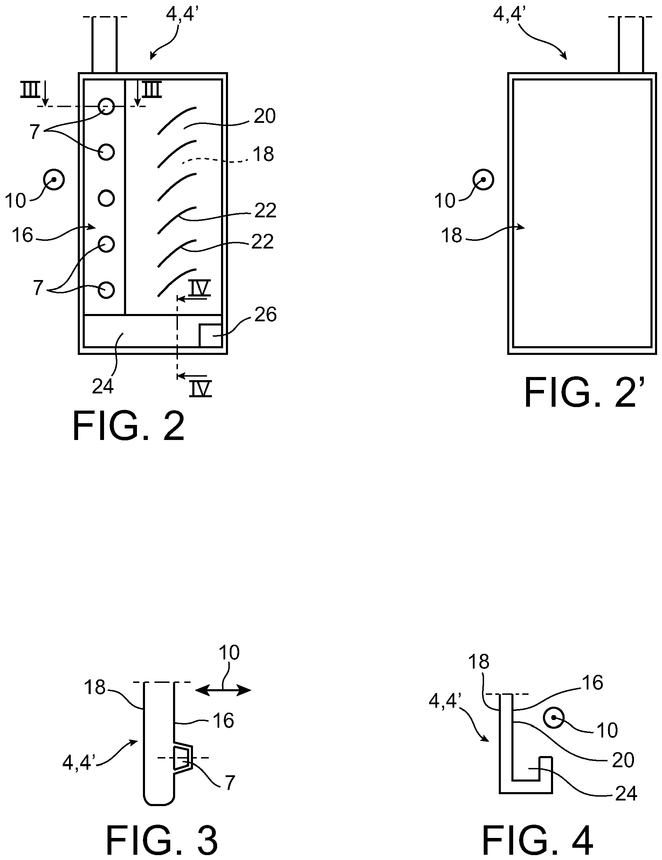

[Fig. 2'] est similaire à la figure 2, avec le dispositif de pulvérisation principal vu depuis l'extérieur de la zone de pulvérisation ;
[Fig. 3] est une vue en coupe prise le long de la ligne III-III de la figure 2 ;
[Fig. 4] est une vue en coupe prise le long de la ligne IV-IV de la figure 2 ;

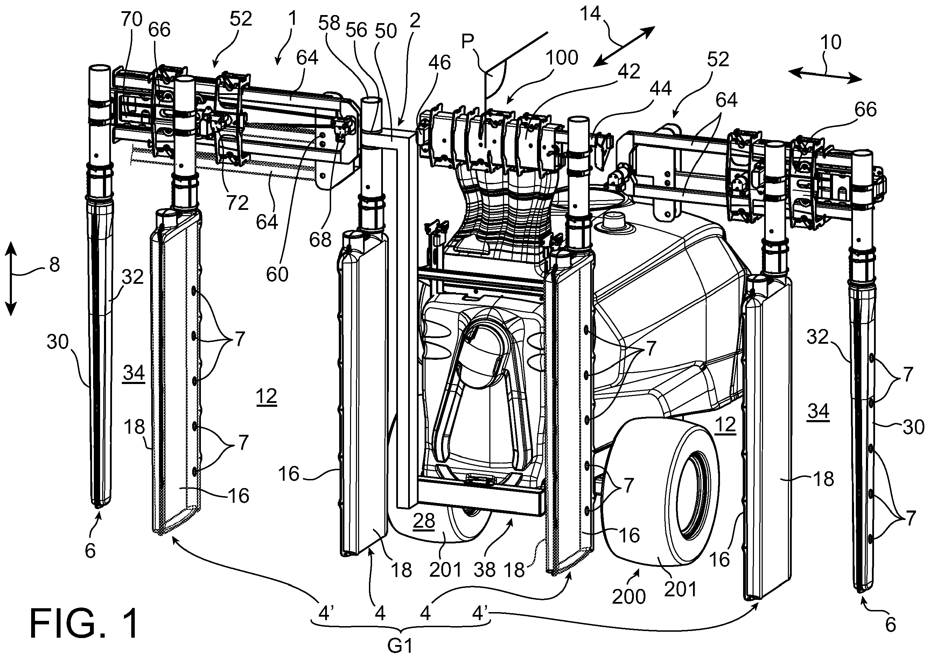

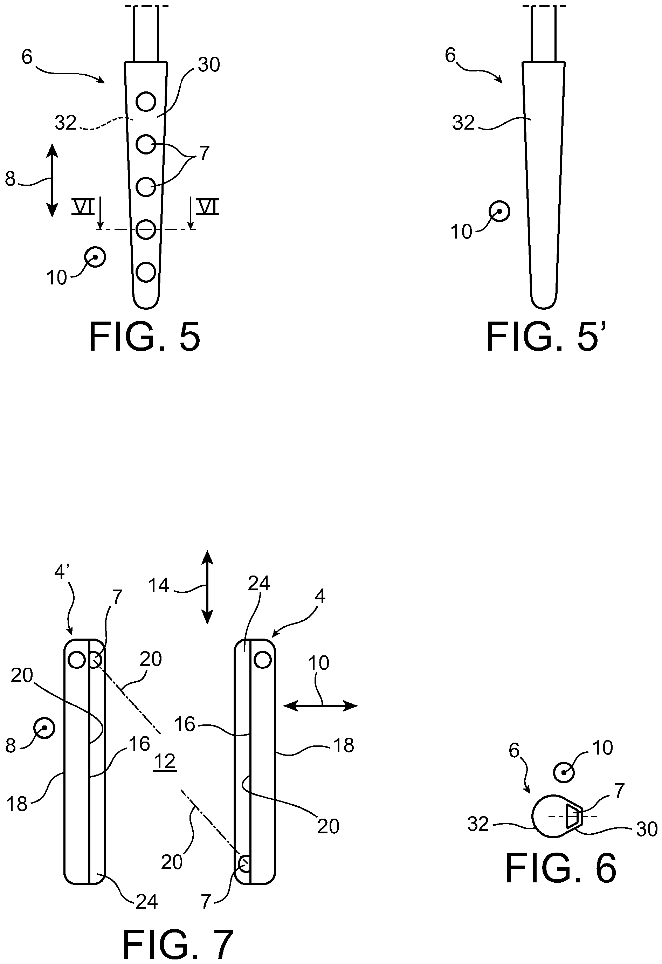

[Fig. 5] représente une vue selon la direction transversale d'un dispositif de pulvérisation additionnel de liquide de traitement, équipant le pulvérisateur montré sur la figure 1, le dispositif de pulvérisation étant vu depuis l'extérieur du pulvérisateur ;
[Fig. 5'] est similaire à la figure 5, avec le dispositif de pulvérisation additionnel vu depuis l'intérieur du pulvérisateur ;
[Fig. 6] est une vue en coupe prise le long de la ligne VI-VI de la figure 5 ;
[Fig. 7] représente une vue de dessus d'une paire de dispositifs de pulvérisation principaux ;

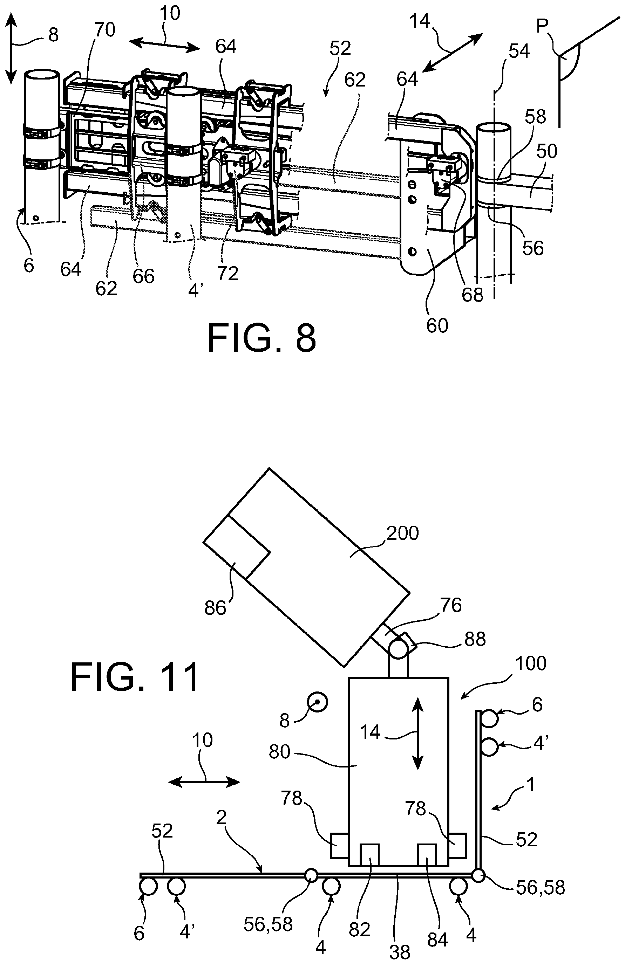

[Fig. 8] représente une vue en perspective de l'une des deux parties latérales de support appartenant à la structure de support équipant le pulvérisateur montré sur la figure 1 ;

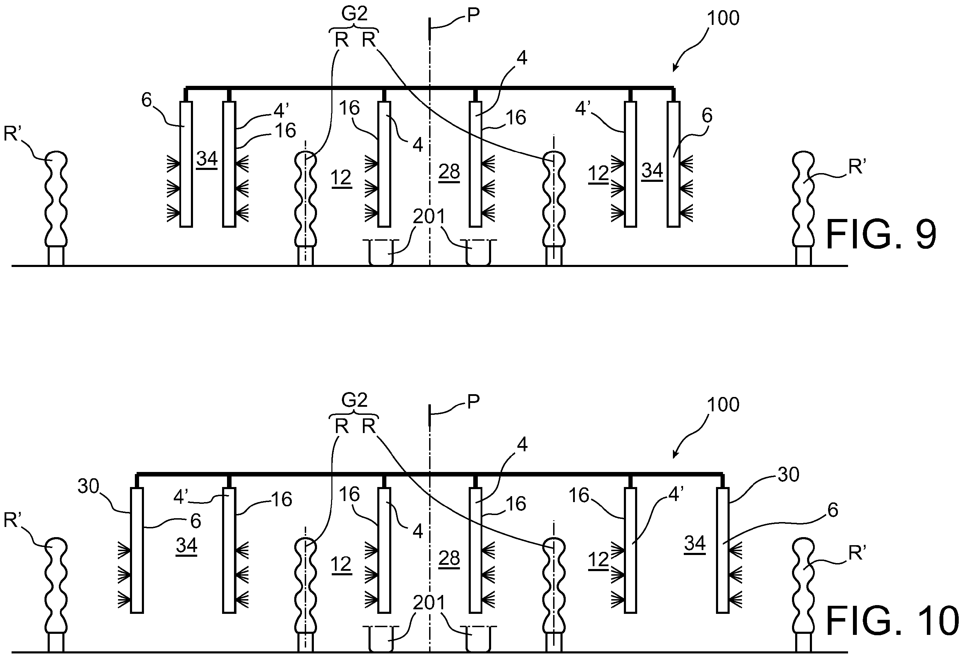

[Fig. 9] représente une vue schématique illustrant un premier procédé de traitement de végétation disposée selon des rangs ;
[Fig. 10] représente une vue schématique illustrant un second procédé de traitement de végétation disposée selon des rangs ; et
[Fig. 11] représente une vue schématique de dessus d'un pulvérisateur selon un second mode de réalisation préféré de l'invention, tracté par un tracteur.

### EXPOSÉ DÉTAILLÉ DE MODES DE RÉALISATION PRÉFÉRÉS

En référence tout d'abord à la figure 1, il est représenté un pulvérisateur 100 selon un premier mode de réalisation préféré de l'invention, destiné à traiter une végétation disposée selon des rangs, comme des rangs de vigne. Ce pulvérisateur 100 est ici porté par un tracteur 200, par exemple à l'avant de ce dernier. Il est équipé de moyens classiques qui n'ont pas été représentés sur la figure 1, comme une cuve de liquide de traitement, une pompe à liquide de traitement pour alimenter des dispositifs de pulvérisation, un générateur d'air pour alimenter des diffuseurs d'air, ou encore des conduits de raccord pour la circulation de liquide et d'air entre les différents composants du pulvérisateur.

Sur le pulvérisateur 100 de la figure 1, seul le système de pulvérisation 1, spécifique à la présente invention, a été représenté. Il comporte globalement une structure de support 2, ainsi que des dispositifs de pulvérisation de liquide de traitement portés par ce support, en étant suspendus à cette structure 2. Les dispositifs de pulvérisation de liquide de traitement, référencés 4, 4', et 6, présentent une forme allongée selon la direction verticale 8, direction selon laquelle ils sont parallèles les uns aux autres.

Les dispositifs 4 et 4' forment un groupe central G1 de dispositifs de pulvérisation principaux. Ils sont directement consécutifs selon une direction transversale 10 du système de pulvérisation 1, et espacés les uns des autres selon cette même direction transversale. Les dispositifs principaux 4, 4' sont prévus dans un nombre n pair, par exemple deux, quatre ou six. Dans le premier mode de réalisation préféré de la figure 1, ce sont quatre dispositifs 4, 4' qui forment le groupe central G1. Ces dispositifs sont associés deux à deux de manière à former un nombre n/2 de paires de dispositifs, chaque paire étant destinée au traitement d'un rang de végétation, depuis les deux côtés opposés de ce rang. En effet, chaque paire délimite transversalement, entre ses deux dispositifs de pulvérisation principaux 4, 4', une zone de pulvérisation 12 destinée à recevoir au moins une partie du rang associé. En d'autres termes, chaque paire de dispositifs 4, 4' est assimilable à un étrier ou à un couloir mobile de traitement de ce rang. Pour chaque paire, les deux dispositifs principaux 4, 4' sont agencés en vis-à-vis selon la direction transversale. Sur la figure 1, les deux paires sont représentées dans un même plan transversal du système. Néanmoins, un décalage entre ces paires pourrait être adopté selon une direction axiale 14 du système, sans sortir du cadre de l'invention.

Le groupe central G1 de dispositifs de pulvérisation principaux 4, 4' est complété par deux dispositifs de pulvérisation additionnels 6. Ces deux dispositifs 6 sont agencés de part et d'autre du groupe G1, selon la direction transversale 10. Ainsi, chaque dispositif additionnel 6 est associé à l'un des deux dispositifs de pulvérisation principaux 4' agencés aux deux extrémités transversales opposées du groupe G1. Par la suite, ces dispositifs 4' seront dénommés « dispositifs de pulvérisation principaux extrêmes », ou encore « dispositifs extrêmes ».

Les dispositifs additionnels 6 peuvent se situer dans un même plan transversal que les paires de dispositifs principaux 4, 4', ou bien être décalés de celles-ci selon la direction axiale 14. L'une des particularités de l'invention, qui sera décrite en détail ultérieurement, réside dans le caractère mobile de chaque dispositif de pulvérisation additionnel 6, par rapport à son dispositif extrême associé 4'. Ce degré de liberté permet aux dispositifs additionnels 6 d'adopter plusieurs positions distinctes, amenant le système de pulvérisation 1 dans différentes configurations s'adaptant au niveau de croissance des rangs de végétation à traiter.

De plus, les dispositifs additionnels 6 présentent une conception différente de celle des dispositifs principaux 4, 4'. En effet, en référence conjointement aux figures 1, 2, 2', 3, 4 et 7, il est noté que chacun des dispositifs principaux 4, 4' présente deux faces opposées selon la direction transversale 10, dont une première face 16 fonctionnalisée, et une seconde face 18 non fonctionnalisée. Plus précisément, la première face 16 correspond à celle qui délimite transversalement la zone de pulvérisation 12. Elle est équipée de moyens de pulvérisation de liquide de traitement, ainsi que de moyens de récupération de liquide de traitement.

Les moyens de pulvérisation comprennent une pluralité de buses 7 de pulvérisation de liquide de traitement, réparties le long de la direction verticale 8. Ces buses 7 peuvent être réparties selon une ou plusieurs rangées verticales. Elles sont alimentées par du liquide de traitement présent dans la cuve, via la pompe du pulvérisateur. Ce produit peut être un liquide phytosanitaire, ou un engrais liquide, ou encore un mélange de ces liquides. Bien que cela n'ait pas été représenté, de manière classique et connue, chaque buse 7 de pulvérisation de liquide de traitement est assistée par une ou plusieurs buses d'air, alimentée par le générateur d'air du pulvérisateur.

Comme cela est visible sur les figures 2 et 7, la ou les rangées verticales de buses 7 peuvent être agencée sur ou proche d'une extrémité axiale de la première face 16 du dispositif 4, 4'. Dans ce cas de figure, l'axe 20 de ces buses peut être incliné par rapport à la direction transversale en vue de dessus, afin d'orienter le liquide pulvérisé davantage vers le centre de la zone de pulvérisation 12. En outre, au sein de chaque paire de dispositifs principaux 4, 4' telle que celle montrée sur la figure 7, les buses 7 de l'un de ces deux dispositifs peuvent être agencées au niveau d'une extrémité axiale de la première face 16 de ce dispositif, tandis que les buses 7 de l'autre dispositif peuvent être agencées au niveau d'une extrémité axiale opposée de la première face 16 de ce cet autre dispositif 4, 4'.

Toujours sur la première face 16 de chaque dispositif principal 4, 4', il est prévu des moyens de récupération de liquide de traitement provenant du dispositif principal placé en vis-à-vis, et formant avec ce dernier l'une des paires de dispositifs 4, 4'. Dans le cas d'un traitement opéré sur une végétation à feuillage de faible densité ou même dépourvue de feuilles, une partie du liquide de traitement pulvérisé depuis chacun des deux dispositifs principaux 4, 4' de la paire peut être amené à traverser le rang de végétation. L'objet de ces moyens réside ainsi dans la récupération d'au moins une partie de ce liquide, à l'aide de l'autre dispositif 4, 4' de la paire.

Pour ce faire, les moyens de récupération comprennent, au niveau de la première face 16 de chacun des deux dispositifs 4, 4', un panneau 20 de captation de liquide de traitement. Ce panneau 20 s'étend sur la majeure partie de la première face 16, orientée transversalement. Il est équipé d'ailettes 22 permettant de rediriger le liquide capté, par gravité, vers un bac de récupération de liquide de traitement 24 agencé en partie inférieure du dispositif 4, 4'. Enfin, une pompe d'évacuation du liquide de traitement 26, schématisée sur la figure 2, permet de réinjecter le liquide capté dans le circuit, vers la cuve du pulvérisateur. La pompe 26 peut être agencée dans le bac 24, ou à proximité de celui-ci. Bien évidemment, les moyens de récupération décrits ci-dessus correspondent à un exemple particulier, mais toute solution connue pour remplir cette fonction peut être mise en oeuvre sur le système de pulvérisation 1, sans sortir du cadre de l'invention.

La seconde face 18 de chaque dispositif de pulvérisation principal 4, 4', orientée transversalement à l'opposé de la zone de pulvérisation 12, est dépourvue de tout moyen de pulvérisation de liquide/air. Comme indiqué précédemment, cette seconde face 18 n'est pas fonctionnalisée, c'est-à-dire qu'elle n'est pas conçue pour interagir de quelque manière que ce soit avec les rangs de végétation à traiter. Ainsi, au sein du groupe central G1 de dispositifs principaux 4, 4', les secondes faces 18 en regard deux à deux délimitent un / des espaces non-fonctionnels 28.

Aux extrémités opposées du groupe central G1 de dispositifs principaux 4, 4', les deux dispositifs de pulvérisation additionnels 6 fonctionnent quant à eux individuellement, et non par paires comme pour les dispositifs principaux 4, 4'. Leur conception est différente de celle des dispositifs principaux, puisqu'ils ne remplissent pas de fonction de récupération de liquide. Aussi, les deux dispositifs de pulvérisation additionnels 6 présentent une section horizontale de forme générale circulaire ou ovale, tandis que la section horizontale des dispositifs principaux 4, 4' est plus étendue et davantage rectangulaire, du fait de l'incorporation du panneau de captation de liquide de traitement.

En référence conjointement aux figures 1, 5, 5' et 6, il est noté que chacun des dispositifs additionnels 6 présente deux faces opposées selon la direction transversale 10, dont une première face 30 fonctionnalisée, et une seconde face 32 non fonctionnalisée. Plus précisément, la première face 30 est équipée de moyens de pulvérisation de liquide de traitement, comprenant ici aussi une pluralité de buses 7 de pulvérisation de liquide de traitement, réparties le long de la direction verticale 8. Ces buses 7 peuvent être réparties selon une ou plusieurs rangées verticales. Elles sont alimentées par du liquide de traitement présent dans la cuve, via la pompe du pulvérisateur. Bien que cela n'ait pas non plus été représenté pour les dispositifs additionnels 6, de manière classique et connue, chaque buse 7 de pulvérisation de liquide de traitement est associée à une ou plusieurs buses d'air, alimentée par le générateur d'air du pulvérisateur.

En revanche, la seconde face 32 de chaque dispositif de pulvérisation additionnel 6 est dépourvue de tout moyen de pulvérisation de liquide/air. Comme indiqué précédemment, cette seconde face 32 n'est pas fonctionnalisée, c'est-à-dire qu'elle n'est pas conçue pour interagir de quelque manière que ce soit avec les rangs de végétation à traiter. La première face 30 est celle orientée transversalement vers l'extérieur, tandis que la seconde face 32 est orientée transversalement vers l'intérieur, en vis-à-vis de la seconde face 18 du dispositif extrême 4' associé. Ces deux faces 18, 32 délimitent ainsi deux à deux des espaces non-fonctionnels 34.

Avec cette conception, les deux premières faces 30 des deux dispositifs additionnels 6 forment les deux faces extérieures d'extrémité transversale du système de pulvérisation 1.

En référence à présent aux figures 1 et 8, il va être décrit la structure de support 2 du système de pulvérisation 1. Cette structure 2 comporte tout d'abord une partie centrale de support 38, dont un cadre 40 fixé sur le tracteur 200. En partie supérieure du cadre 40, la partie centrale 38 comprend un fourreau transversal 42 dans lequel sont montées deux traverses 44 (une seule étant représentée sur la partie droite de la figure 1), orientées transversalement. Chaque traverse 44 est montée coulissante dans le fourreau 42, selon la direction transversale 10. A son extrémité extérieure, chaque traverse 44 porte fixement l'un des dispositifs de pulvérisation principal 4. La position transversale de traverses 44, par rapport au fourreau fixe 42, est commandée par un actionneur 46 relié à une unité de commande (non représentée) du système de pulvérisation.

Aux extrémités supérieures transversales du cadre 40, celui-ci est prolongé transversalement par deux traverses 50 (une seule étant représentée sur la partie gauche de la figure 1). A l'extrémité extérieure de chaque traverse 50, il est monté une partie latérale de support 52, étant entendu que les deux parties latérales 52 se trouvent ainsi agencées de part et d'autre de la partie centrale 38, selon la direction transversale. Les deux parties latérales de support 52 étant de conception symétrique par rapport à un plan axial et vertical médian P du pulvérisateur, seule l'une des deux parties latérales 52 sera décrites ci-après.

La partie latérale de support 52 est montée pivotante sur la partie centrale 38, à l'extrémité extérieure de la traverse 50. L'axe de pivotement 54 est vertical. La liaison pivot 56 permettant cette articulation est commandée par un actionneur 58, également relié à l'unité de commande. L'actionneur 58 permet ainsi de commander la position angulaire de la partie latérale de support 52, par rapport à la partie centrale de support 38.

La liaison pivot 56 est reliée fixement à une platine 60 de la partie latérale de support 52. A partir ce cette platine 60, s'étendent transversalement deux longerons 62, ainsi qu'un châssis intermédiaire comportant deux longerons 64 s'étendant également transversalement. Une partie du châssis intermédiaire en forme de cadre est fixée aux longerons 62, et supporte à coulissement un chariot 66 auquel est fixé l'un des dispositifs extrêmes 4'. La position transversale du chariot 66 est déterminée par un actionneur 68 et/ou 72, également relié à l'unité de commande.

Un second chariot 70 est monté pour coulisser sur le chariot 66, selon la direction transversale 10. Ce second chariot 70 supporte l'un des dispositifs additionnels 6. La position transversale du second chariot 70 est déterminée par un actionneur 72 porté par le chariot 66, et également relié à l'unité de commande du système de pulvérisation. Grâce à l'actionneur 68, le dispositif additionnel 6 est déplaçable en translation selon la direction 10, par rapport à son dispositif extrême associé 4'.

Le dispositif additionnel 6 se trouve ainsi déplaçable entre une première position inactive de repos telle que montrée sur la figure 9, et une seconde position de fonctionnement telle que montrée sur la figure 10.

Tout d'abord en référence à la figure 9, chacun des deux dispositifs additionnels 6 adopte donc sa première position inactive de repos, dans laquelle il est rapproché au plus près de son dispositif extrême associé 4'. Cette première position des dispositifs additionnels 6 amène le système de pulvérisation 1 dans une première configuration, permettant de réaliser un premier type de traitement sur un nombre n/2 de rangs de végétation, c'est-à-dire ici deux rangs R directement consécutifs et formant un groupe central G2 de rangs. Lors de ce premier type de traitement, le tracteur roule entre les deux rangs du groupe central G2, comme cela a été schématisé par les roues 201 du tracteur. Les dispositifs additionnels 6 ne sont pas utilisés, et les dispositifs principaux 4, 4' fonctionnent en mode activé de récupération de liquide de traitement. Ainsi, chaque paire de dispositifs principaux 4, 4' est associée à l'un des rangs R, de manière à ce que chaque rang agencé en partie dans la zone de pulvérisation 12 puisse être pulvérisé de liquide de traitement sur ses deux côtés opposés, respectivement depuis les deux premières faces 16 des dispositifs 4, 4'.

Dans ce premier type de traitement, adopté lorsque le feuillage de la végétation est inexistant ou de faible densité, les rangs agencés aux extrémités du groupe central G2 ne sont pas traités.

En référence à présent à la figure 10, chacun des deux dispositifs additionnels 6 adopte sa seconde position de fonctionnement, dans laquelle il est davantage écarté de son dispositif extrême associé 4' que dans la première position. Cette seconde position des dispositifs additionnels 6 amène le système de pulvérisation 1 dans une seconde configuration, permettant de réaliser un second type de traitement sur les n/2 rangs de végétation du groupe central G2, ainsi que sur l'un des côtés des deux rangs additionnels R' situés de part et d'autre du groupe G2.

Lors de ce second type de traitement, le tracteur roule également entre les deux rangs du groupe central G2, comme cela a été schématisé par les roues 201 du tracteur. Les dispositifs additionnels 6 sont utilisés pour pulvériser vers l'extérieur à l'aide de leur première face 30, sur l'un des côtés des rangs additionnels R' correspondant au côté en vis-à-vis du groupe central G2. Les dispositifs principaux 4, 4' fonctionnent quant à eux dans un mode désactivé de récupération de liquide de traitement, mais toujours de manière à ce que chaque rang R, agencé en partie dans la zone de pulvérisation 12, puisse être pulvérisé de liquide de traitement sur ses deux côtés opposés.

Dans ce second type de traitement, adopté lorsque le feuillage est plus dense, les rangs agencés aux extrémités du groupe central G2 sont ainsi traités seulement sur l'un de leurs deux côtés.

Quelle que soit la configuration adoptée pour le système de pulvérisation 1, chaque dispositif de pulvérisation additionnel 6 et son dispositif extrême associé 4' sont introduits dans un même espace de la parcelle séparant deux rangs R, R' directement consécutifs.

De plus, grâce aux degrés de liberté procurés par la structure de support 2, la distance de tir peut être librement réglée pour chaque dispositif de pulvérisation 4, 4', 6, prenant une forme générale de pendentif.

La figure 11 représente un pulvérisateur 100 selon un second mode de réalisation préféré de l'invention. Il n'est plus porté, mais tracté par un tracteur 200, via un timon articulé 76. Le tracteur peut être de conception classique, à savoir destiné à circuler entre les rangs de végétation, ou bien du type enjambeur de rangs. Sur le pulvérisateur 100, il a été représenté de manière schématique les roues 78 du pulvérisateur, la cuve 80, la pompe à liquide de traitement 82 et le générateur d'air 84. Ici, l'unité de commande 86 du système de pulvérisation 1 est embarquée dans le tracteur 200, et elle communique par exemple par liaison sans fil avec les actionneurs mentionnés précédemment, parmi lesquels l'actionneur 58 permettant de commander la position angulaire de chaque partie latérale de support 52, par rapport à la partie centrale de support 38.

Sur la figure 11, la partie latérale 52 de droite a été représentée dans une position rabattue contre la cuve 80 du pulvérisateur. Cette position est notamment adoptée lors d'un roulage sur route, pour limiter l'encombrement transversal du système de pulvérisation 1.

L'actionneur 58 de la liaison pivot 56 peut être commandé de manière automatique, par l'unité 86, en fonction de la position angulaire du pulvérisateur 100 relativement au tracteur 200. Cette position angulaire peut être détectée par un capteur 88 équipant le timon 76. Ainsi, lorsque le pulvérisateur 100 arrive en bout de rangs et amorce un virage, l'unité de commande 86 peut détecter un changement de position angulaire relative au moyen du capteur 88, et commander automatiquement le repliement de la partie latérale de support 52 située du côté opposé au virage, comme cela a été schématisé sur la portion de droite de la figure 11. En réaction à cette détection, le dispositif de pulvérisation additionnel 6 peut également être rétracté.

Néanmoins, une commande manuelle de la position angulaire des parties latérales de support 52 est de préférence également disponible, via l'unité de commande 86.

Enfin, il est noté que ce principe de rabattement automatique de l'une de parties latérales de support 52, suite à un virage du tracteur, est également transposable au premier mode de réalisation décrit ci-dessus. Dans ce cas, la commande de la position angulaire de la partie latérale 52 peut répondre à l'angle de braquage des roues du tracteur.

Bien entendu, diverses modifications peuvent être apportées par l'homme du métier à l'invention qui vient d'être décrite, uniquement à titre d'exemples non limitatifs et dont la portée définie par les revendications annexées. En particulier, les différents modes de réalisation préférés peuvent être combinés entre eux.

## Revendications

1. Système (1) de pulvérisation de liquide de traitement de végétation pour pulvérisateur, le système comprenant une structure de support (2) ainsi qu'un groupe central (G1) de dispositifs de pulvérisation principaux (4, 4') suspendus à la structure de support et espacés les uns des autres selon une direction transversale (10) du système, les dispositifs de pulvérisation principaux (4, 4') étant prévus dans un nombre n pair supérieur ou égal à deux et étant associés deux à deux de manière à former un nombre n/2 de paires de dispositifs, chaque paire délimitant transversalement entre ses deux dispositifs de pulvérisation principaux (4, 4') une zone de pulvérisation (12), et chacun des deux dispositifs de pulvérisation principaux comprenant une première face (16) ainsi qu'une seconde face (18) opposée à la première face selon la direction transversale, la première face (16) délimitant la zone de pulvérisation (12) et étant équipée de moyens de pulvérisation de liquide de traitement (7) ainsi que de moyens de récupération de liquide de traitement (20, 24, 26), et la seconde face (18) étant dépourvue de moyens de pulvérisation de liquide de traitement, **caractérisé en ce que** le système (1) comporte en outre, associé à chacun des deux dispositifs de pulvérisation principaux agencés respectivement aux deux extrémités transversales opposées du groupe central (G), dits dispositifs extrêmes (4'), un dispositif de pulvérisation additionnel (6) de conception différente de celle des dispositifs de pulvérisation principaux (4, 4'), chaque dispositif de pulvérisation additionnel (6) comportant une première face (30) ainsi qu'une seconde face (32) opposée à la première face selon la direction transversale (10), la première face (30) étant équipée de moyens de pulvérisation de liquide de traitement (7) tandis que la seconde face (32) est dépourvue de moyens de pulvérisation de liquide de traitement, chaque dispositif de pulvérisation additionnel (6) étant agencé mobile par rapport à son dispositif extrême associé (4'), entre :
- une première position inactive de repos ; et
- une seconde position de fonctionnement dans laquelle le dispositif de pulvérisation additionnel (6) se trouve, selon la direction transversale (10), plus écarté de son dispositif extrême associé (4') que dans la première position inactive de repos, seconde position dans laquelle la première face (32) du dispositif de pulvérisation additionnel (6) se trouve orientée transversalement vers l'extérieur, de manière à former une face extérieure d'extrémité transversale du système de pulvérisation (1).

2. Système de pulvérisation selon la revendication 1, **caractérisé en ce que** les dispositifs de pulvérisation principaux (4, 4') et les dispositifs de pulvérisation additionnels (6) sont sensiblement parallèles les uns aux autres, et de préférence agencés verticalement.

3. Système de pulvérisation selon la revendication 1 ou la revendication 2, **caractérisé en ce que** la structure de support (2) comporte une partie centrale de support (38), ainsi que deux parties latérales de support (52) montées de part et d'autre de la partie centrale de support.

4. Système de pulvérisation selon la revendication 3, **caractérisé en ce que** chacune des deux parties latérales de support (52) est montée pivotante sur la partie centrale de support (38), et **en ce que** le système comporte un actionneur (58) permettant de commander la position angulaire de chaque partie latérale de support (52) par rapport à la partie centrale de support (38).

5. Système de pulvérisation selon l'une quelconque des revendications précédentes, **caractérisé en ce qu'**il comporte une unité de commande (86) permettant d'amener le système de pulvérisation dans deux configurations de fonctionnement distinctes, à savoir :
- une première configuration dans laquelle les moyens (20, 24, 26) de récupération de liquide de traitement des dispositifs de pulvérisation principaux sont activés, et dans laquelle les deux dispositifs de pulvérisation additionnels (6) adoptent leur première position inactive de repos ; et
- une seconde configuration dans laquelle les moyens (20, 24, 26) de récupération de liquide de traitement des dispositifs de pulvérisation principaux sont désactivés, et dans laquelle les deux dispositifs de pulvérisation additionnels (6) adoptent leur seconde position de fonctionnement.

6. Système de pulvérisation selon l'une quelconque des revendications précédentes, **caractérisé en ce que** les moyens de récupération de liquide de traitement de chaque dispositif de pulvérisation principal comprennent au moins :
- un panneau (20) de captation de liquide de traitement ;
- un bac (24) de récupération de liquide de traitement, le bac étant agencé sous le panneau de captation (20) ; et
- une pompe (26) d'évacuation du liquide de traitement collecté dans le bac de récupération (24).

7. Système de pulvérisation selon l'une quelconque des revendications précédentes, **caractérisé en ce que** les moyens de pulvérisation de liquide de traitement des dispositifs de pulvérisation principaux (4, 4') et des dispositifs de pulvérisation additionnels (6) comprennent une pluralité de buses de pulvérisation de liquide de traitement (7), réparties le long de leur dispositif de pulvérisation associé.

8. Système de pulvérisation selon l'une quelconque des revendications précédentes, **caractérisé en ce que** chaque dispositif de pulvérisation additionnel (6) est agencé mobile en translation par rapport à son dispositif extrême associé (4'), entre la première position inactive de repos et la seconde position de fonctionnement.

9. Système de pulvérisation selon l'une quelconque des revendications précédentes, **caractérisé en ce que** les moyens de pulvérisation de liquide de traitement (7) sont associés à une assistance d'air.

10. Pulvérisateur (100) de liquide de traitement de végétation destiné à être tracté par un véhicule (200) ou porté par ce dernier, le pulvérisateur comprenant un système de pulvérisation (1) selon l'une quelconque des revendications précédentes, ainsi qu'au moins une cuve (80) de liquide de traitement et au moins une pompe (82) pour alimenter les dispositifs de pulvérisation principaux (4, 4') et les dispositifs de pulvérisation additionnels (6).

11. Procédé de traitement de végétation disposée selon des rangs, à l'aide d'un système de pulvérisation (1) selon l'une quelconque des revendications 1 à 9 combinée à la revendication 5 et se trouvant dans la seconde configuration dans laquelle les moyens (20, 24, 26) de récupération de liquide de traitement des dispositifs de pulvérisation principaux sont désactivés, et dans laquelle les deux dispositifs de pulvérisation additionnels (6) adoptent leur seconde position de fonctionnement, le procédé consistant à traiter simultanément :
- un groupe central de rangs (G2) comprenant un nombre n/2 de rangs (R) consécutifs, en associant chacune desdites n/2 paires de dispositifs de pulvérisation principaux (4, 4') à l'un des n/2 rangs (R), de manière à ce que chaque rang (R) soit agencé au moins en partie dans la zone de pulvérisation (12) délimitée par la paire de dispositifs associée (4, 4'), pour être pulvérisé de liquide de traitement sur ses deux côtés opposés ; et
- l'un des deux côtés opposés de deux rangs additionnels (R') respectivement agencés de part et d'autre du groupe central de rangs (G2), à l'aide des deux dispositifs de pulvérisation additionnels (6) adoptant leur seconde position de fonctionnement.

12. Procédé de traitement de végétation disposée selon des rangs, à l'aide d'un système de pulvérisation (1) selon l'une quelconque des revendications 1 à 9 combinée à la revendication 5 et se trouvant dans la première configuration dans laquelle les moyens (20, 24, 26) de récupération de liquide de traitement des dispositifs de pulvérisation principaux sont activés, et dans laquelle les deux dispositifs de pulvérisation additionnels (6) adoptent leur première position inactive de repos, le procédé consistant à traiter simultanément :
- un groupe central de rangs (G2) comprenant un nombre n/2 de rangs (R) consécutifs, en associant chacune desdites n/2 paires de dispositifs de pulvérisation principaux (4, 4') à l'un des n/2 rangs (R), de manière à ce que chaque rang (R) soit agencé au moins en partie dans la zone de pulvérisation (12) délimitée par la paire de dispositifs associée (4, 4'), pour être pulvérisé de liquide de traitement sur ses deux côtés opposés.

## Patentansprüche

1. System (1) zum Verspritzen von Flüssigkeit zur Behandlung von Pflanzen für ein Spritzgerät, wobei das System eine tragende Struktur (2) sowie eine zentrale Gruppe (G1) von Hauptspritzvorrichtungen (4, 4') umfasst, die an der tragenden Struktur angehängt und in einer Querrichtung (10) des Systems voneinander beabstandet sind, wobei die Hauptspritzvorrichtungen (4, 4') in einer geraden Anzahl n größer oder gleich zwei vorgesehen sind und paarweise derart zugeordnet sind, dass sie eine Anzahl von n/2 Vorrichtungspaaren bilden, wobei jedes Paar quer zwischen seinen zwei Hauptspritzvorrichtungen (4, 4') eine Spritzzone (12) begrenzt und jede der zwei Hauptspritzvorrichtungen eine erste Fläche (16) sowie eine zweite Fläche (18) gegenüber der ersten Fläche in der Querrichtung umfasst, wobei die erste Fläche (16) die Spritzzone (12) begrenzt und mit Mitteln zum Verspritzen von Behandlungsflüssigkeit (7) sowie mit Mitteln zur Rückgewinnung von Behandlungsflüssigkeit (20, 24, 26) ausgestattet ist und die zweite Fläche (18) ohne Mittel zum Verspritzen von Behandlungsflüssigkeit ist,
**dadurch gekennzeichnet, dass** das System (1) ferner jeder der zwei Hauptspritzvorrichtungen zugeordnet, die jeweils an den zwei gegenüberliegenden transversalen Enden der zentralen Gruppe (G) eingerichtet sind, bezeichnet als Endvorrichtungen (4'), eine zusätzliche Spritzvorrichtung (6) mit einer Konzeption aufweist, die sich von der der Hauptspritzvorrichtungen (4, 4') unterscheidet, wobei jede zusätzliche Spritzvorrichtung (6) eine erste Fläche (30) sowie eine zweite Fläche (32) gegenüber der ersten Fläche in der Querrichtung (10) aufweist, wobei die erste Fläche (30) mit Mitteln zum Verspritzen von Behandlungsflüssigkeit (7) ausgestattet ist, wohingegen die zweite Fläche (32) ohne Mittel zum Verspritzen von Behandlungsflüssigkeit ist, wobei jede zusätzliche Spritzvorrichtung (6) im Verhältnis zu ihrer zugeordneten Endvorrichtung (4') beweglich eingerichtet ist zwischen:
- einer ersten inaktiven Ruheposition; und
- einer zweiten Betriebsposition, in der sich die zusätzliche Spritzvorrichtung (6) in der Querrichtung (10) weiter von ihrer zugeordneten Endvorrichtung (4') beabstandet befindet als in der ersten inaktiven Ruheposition, wobei die zweite Position, in der sich die erste Fläche (32) der zusätzlichen Spritzvorrichtung (6) befindet, quer derart nach außen ausgerichtet ist, dass eine äußere transversale Endfläche des Spritzsystems (1) gebildet wird.

2. Spritzsystem nach Anspruch 1, **dadurch gekennzeichnet, dass** die Hauptspritzvorrichtungen (4, 4') und die zusätzlichen Spritzvorrichtungen (6) etwa parallel zueinander und vorzugsweise vertikal eingerichtet sind.

3. Spritzsystem nach Anspruch 1 oder Anspruch 2, **dadurch gekennzeichnet, dass** die tragende Struktur (2) einen tragenden zentralen Teil (38) sowie zwei tragende seitliche Teile (52) aufweist, die auf der einen und der anderen Seite des tragenden zentralen Teils angebracht sind.

4. Spritzsystem nach Anspruch 3, **dadurch gekennzeichnet, dass** jeder der zwei tragenden seitlichen Teile (52) schwenkend auf dem tragenden zentralen Teil (38) angebracht ist und dass das System einen Aktuator (58) aufweist, der erlaubt, die Winkelposition jedes tragenden seitlichen Teils (52) im Verhältnis zum tragenden zentralen Teil (38) zu steuern.

5. Spritzsystem nach einem der vorangehenden Ansprüche, **dadurch gekennzeichnet, dass** es eine Steuereinheit (86) aufweist, die erlaubt, das Spritzsystem in zwei unterschiedliche Betriebskonfigurationen zu führen, nämlich:
- eine erste Konfiguration, in der die Rückgewinnungsmittel (20, 24, 26) von Behandlungsflüssigkeit der Hauptspritzvorrichtungen aktiviert sind und in der die zwei zusätzlichen Spritzvorrichtungen (6) ihre erste inaktive Ruheposition einnehmen; und
- eine zweite Konfiguration, in der die Rückgewinnungsmittel (20, 24, 26) von Behandlungsflüssigkeit der Hauptspritzvorrichtungen deaktiviert sind und in der die zwei zusätzlichen Spritzvorrichtungen (6) ihre zweite Betriebsposition einnehmen.

6. Spritzsystem nach einem der vorangehenden Ansprüche, **dadurch gekennzeichnet, dass** die Mittel zur Rückgewinnung von Behandlungsflüssigkeit jeder Hauptspritzvorrichtung mindestens umfassen:
- eine Behandlungsflüssigkeits-Auffangplatte (20);
- einen Behandlungsflüssigkeits-Rückgewinnungsbehälter (24), wobei der Behälter unter der Auffangplatte (20) eingerichtet ist; und
- eine Pumpe (26) zum Ableiten der im Rückgewinnungsbehälter (24) gesammelten Behandlungsflüssigkeit.

7. Spritzsystem nach einem der vorangehenden Ansprüche, **dadurch gekennzeichnet, dass** die Mittel zum Verspritzen von Behandlungsflüssigkeit der Hauptspritzvorrichtungen (4, 4') und der zusätzlichen Spritzvorrichtungen (6) eine Vielzahl von Düsen zum Verspritzen von Behandlungsflüssigkeit (7) umfassen, die entlang ihrer zugeordneten Spritzvorrichtung verteilt sein.

8. Spritzsystem nach einem der vorangehenden Ansprüche, **dadurch gekennzeichnet, dass** jede zusätzliche Spritzvorrichtung (6) im Verhältnis zu ihrer zugeordneten Endvorrichtung (4') zwischen der ersten inaktiven Ruheposition und der zweiten Betriebsposition translatorisch beweglich eingerichtet ist.

9. Spritzsystem nach einem der vorangehenden Ansprüche, **dadurch gekennzeichnet, dass** die Mittel zum Verspritzen von Behandlungsflüssigkeit (7) einer Luftunterstützung zugeordnet sind.

10. Gerät zum Verspritzen (100) von Flüssigkeit zur Behandlung von Pflanzen, das bestimmt ist, von einem Fahrzeug (200) gezogen oder von diesem getragen zu werden, wobei das Spritzgerät ein Spritzsystem (1) nach einem der vorangehenden Ansprüche sowie mindestens einen Behandlungsflüssigkeits-Tank (80) und mindestens eine Pumpe (82) umfasst, um die Hauptspritzvorrichtungen (4, 4') und die zusätzlichen Spritzvorrichtungen (6) zu versorgen.

11. Verfahren zur Behandlung von in Reihen angeordneten Pflanzen mit Hilfe eines Spritzsystems (1) nach einem der Ansprüche 1 bis 9 in Kombination mit Anspruch 5 und das sich in der zweiten Konfiguration befindet, in der die Behandlungsflüssigkeits-Rückgewinnungsmittel (20, 24, 26) der Hauptspritzvorrichtungen deaktiviert sind und in der die zwei zusätzlichen Spritzvorrichtungen (6) ihre zweite Betriebsposition einnehmen, wobei das Verfahren darin besteht, gleichzeitig zu behandeln:
- eine zentrale Gruppe von Reihen (G2), umfassend eine Anzahl von n/2 aufeinanderfolgenden Reihen (R) durch Zuordnen jeder der n/2 Paare Hauptspritzvorrichtungen (4, 4') zu einer der n/2 Reihen (R), so dass jede Reihe (R) mindestens zum Teil in der Spritzzone (12) eingerichtet ist, die von dem zugeordneten Vorrichtungspaar (4, 4') begrenzt wird, um mit Behandlungsflüssigkeit auf ihren zwei gegenüberliegenden Seiten besprüht zu werden; und
- wobei eine der zwei gegenüberliegenden Seiten von zwei zusätzlichen Reihen (R'), die jeweils auf der einen und der anderen Seite der zentralen Gruppe von Reihen (G2) angeordnet sind, mit Hilfe der zwei zusätzlichen Spritzvorrichtungen (6) ihre zweite Betriebsposition einnehmen.

12. Verfahren zur Behandlung von in Reihen angeordneten Pflanzen mit Hilfe eines Spritzsystems (1) nach einem der Ansprüche 1 bis 9 in Kombination mit Anspruch 5 und das sich in der ersten Konfiguration befindet, in der die Behandlungsflüssigkeits-Rückgewinnungsmittel (20, 24, 26) der Hauptspritzvorrichtungen aktiviert sind und in der die zwei zusätzlichen Spritzvorrichtungen (6) ihre erste inaktive Ruheposition einnehmen, wobei das Verfahren darin bestehlt, gleichzeitig zu behandeln:
- eine zentrale Gruppe von Reihen (G2), umfassend eine Anzahl von n/2 aufeinanderfolgenden Reihen (R) durch Zuordnen jeder der n/2 Paare Hauptspritzvorrichtungen (4, 4') zu einer der n/2 Reihen (R), so dass jede Reihe (R) mindestens zum Teil in der Spritzzone (12) eingerichtet ist, die von dem zugeordneten Vorrichtungspaar (4, 4') begrenzt wird, um mit Behandlungsflüssigkeit auf ihren zwei gegenüberliegenden Seiten besprüht zu werden.

## Claims

1. A system (1) for spraying vegetation treatment liquid for a sprayer, the system comprising a support structure (2) as well as a central group (G1) of main spraying devices (4, 4') suspended from the support structure and spaced apart from each other along a transverse direction (10) of the system, the main spraying devices (4, 4') being provided in an even number n greater than or equal to two and being associated in twos so as to form a number n/2 of pairs of devices, each pair transversely delimiting, between its two main spraying devices (4, 4'), a spraying zone (12) and each of the two main spraying devices comprising a first face (16) as well as a second face (18) opposite the first face along the transverse direction, the first face (16) delimiting the spraying zone (12) and being fitted with treatment liquid spraying means (7) as well as treatment liquid recovery means (20, 24, 26), and the second face (18) being devoid of treatment liquid spraying means,
**characterised in that** the system (1) further comprises, associated with each of the two main spraying devices arranged respectively at the two opposite transverse ends of the central group (G), the so-called end devices (4'), an additional spraying device (6) of a different design from that of the main spraying devices (4, 4'), each additional spraying device (6) comprising a first face (30) as well as a second face (32) opposite the first face along the transverse direction (10), the first face (30) being fitted with treatment liquid spraying means (7) while the second face (32) is devoid of treatment liquid spraying means, each additional spraying device (6) being arranged movable with respect to its associated end device (4') between:
- a first inactive rest position; and
- a second operating position in which the additional spraying device (6) is, along the transverse direction (10), further away from its associated end device (4') than in the first inactive rest position, in which second position the first face (32) of the additional spraying device (6) is oriented transversely towards the outside, so as to form a transverse end outer face of the spraying system (1).

2. The spraying system according to claim 1, **characterized in that** the main spraying devices (4, 4') and the additional spraying devices (6) are substantially parallel to each other, and preferably arranged vertically.

3. The spraying system according to claim 1 or claim 2, **characterized in that** the support structure (2) comprises a central support part (38), as well as two side support parts (52) mounted on either side of the central support part.

4. The spraying system according to claim 3, **characterised in that** each of the two side support parts (52) is pivotably mounted to the central support part (38), and **in that** the system comprises an actuator (58) for controlling the angular position of each side support part (52) with respect to the central support part (38).

5. The spraying system according to any of the preceding claims, **characterised in that** it comprises a control unit (86) for bringing the spraying system into two distinct operating configurations, namely:
- a first configuration in which the treatment liquid recovery means (20, 24, 26) of the main spraying devices are activated, and in which the two additional spraying devices (6) assume their first inactive rest position; and
- a second configuration in which the treatment liquid recovery means (20, 24, 26) of the main spraying devices are deactivated, and in which the two additional spraying devices (6) assume their second operating position.

6. The spraying system according to any of the preceding claims, **characterised in that** the treatment liquid recovery means of each main spraying device comprise at least:
- a treatment liquid collection panel (20);
- a treatment liquid recovery tray (24), the can being arranged under the collection panel (20); and
- a pump (26) for discharging the treatment liquid collected in the recovery tray (24).

7. The spraying system according to any of the preceding claims, **characterised in that** the treatment liquid spraying means of the main spraying devices (4, 4') and the additional spraying devices (6) comprise a plurality of treatment liquid spraying nozzles (7), distributed along their associated spraying device.

8. The spraying system according to any of the preceding claims, **characterised in that** each additional spraying device (6) is arranged translatably movable with respect to its associated end device (4'), between the first inactive rest position and the second operating position.

9. The spraying system according to any of the preceding claims, **characterised in that** the treatment liquid spraying means (7) are associated with an air assistance.

10. A vegetation treatment liquid sprayer (100) for being towed or carried by a vehicle (200), the sprayer comprising a spraying system (1) according to any of the preceding claims, as well as at least one treatment liquid tank (80) and at least one pump (82) for supplying the main spraying devices (4, 4') and the additional spraying devices (6).

11. A method for treating vegetation arranged in rows, using a spraying system (1) according to any of claims 1 to 9 in combination with claim 5 and being in the second configuration in which the treatment liquid recovery means (20, 24, 26) of the main spraying devices are deactivated, and in which the two additional spraying devices (6) assume their second operating position, the method consisting in simultaneously treating:
- a central group of rows (G2) comprising a number n/2 of consecutive rows (R), by associating each of said n/2 pairs of main spraying devices (4, 4') with one of the n/2 rows (R), so that each row (R) is arranged at least partly in the spraying zone (12) delimited by the associated pair of devices (4, 4'), to be sprayed with treatment liquid on its two opposite sides; and
- one of the two opposite sides of two additional rows (R') respectively arranged on either side of the central group of rows (G2), using the two additional spraying devices (6) assuming their second operating position.

12. A method for treating vegetation arranged in rows, using a spraying system (1) according to any of claims 1 to 9 in combination with claim 5 and being in the first configuration in which the treatment liquid recovery means (20, 24, 26) of the main spraying devices are activated, and in which the two additional spraying devices (6) assume their first inactive rest position, the method consisting in simultaneously treating:
- a central group of rows (G2) comprising a number n/2 of consecutive rows (R), by associating each of said n/2 pairs of main spraying devices (4, 4') with one of the n/2 rows (R), so that each row (R) is arranged at least partly in the spraying zone (12) delimited by the associated pair of devices (4, 4'), to be sprayed with treatment liquid on its two opposing sides.
